# EUROPEAN PATENT APPLICATION

(11) **EP 1 570 947 A2**
(43) Date of publication of application: **07.09.2005**
(21) Application number: 05075448.0
(22) Date of filing: 24.02.2005
(51) Int. Cl.: B23Q 11/00

(54) **An apparatus for the removal of drilling debris**

(30) Priority: 05.03.2004 SE 0400562
(71) Applicant: Hertig Knut AB, 432 92 Varberg (SE)
(72) Inventor: Göran Carlsson, 432 92 Varberg (SE)
(74) Representative: Wallengren, Yngvar

(57) **Abstract**

The disclosure relates to an apparatus for the removal of drilling debris on drilling in concrete, brick or similar material at the bottom of a sleeve (2). The apparatus has a screening device (10) which retains the drilling debris in a limited area. The screening device (10) includes a spacer (12) which cooperates with the sleeve (2) and a guide member (11) for sealingly surrounding the drill bit (15) which extends axially through the screening device (10). The apparatus also displays an extraction section (13) which is in flow communication with the interior of the screening device (10). The extraction section (13) is disposed in association with a source of suction for the removal of the drilling debris. The apparatus also has an air inlet (17) which generates an air current into the screening device (10). The extraction section (13) is disposed between the guide member (11) and the drilling area in the bottom of the sleeve (2).

## Description

### TECHNICAL FIELD

The present invention relates to an apparatus for the removal of drilling debris, so-called cuttings, on drilling in concrete, brick or similar materials interiorly at the bottom of a sleeve; and comprising a screening device for retaining the cuttings in a limited area, an extraction section in flow communication with the interior of the screening device and for connection to a source of suction, and also an air inlet for air current into the screening device.

### BACKGROUND ART

Ventilated floors have been employed in many different contexts, principally in attempts to ventilate off residual odours in floors and ground plates and to prevent damp in the subfloor from rising up to superjacent structures and causing damp damage.

Particularly exposed objects are buildings where the foundation of the building has been cast directly on the ground, so-called "slab on ground", in which event the concrete plate or slab is either in direct contact with the ground or rests on insulation. The concrete plate or slab will most generally be uneven in its surface and before an inner flooring can be disposed thereon the surface is evened or screeded off using a filler material which often contains organic material. In other cases, this screeding may be put into effect using a layer of fine-particulate material, for example sand, a plastic layer being possibly disposed thereon as a damp barrier. Above the plastic layer, a nailable subfloor such as a chipboard panel is provided in order to act as a fixing support for the inner flooring, for example a parquet floor. The plastic layer is normally insufficiently tight to prevent damp from rising up into the chipboard panel and possibly also the inner flooring. In the event of a high water table, water under high pressure may penetrate through the concrete plate or slab and be absorbed by the sand and further into the nailable layer which is destroyed and begins to rot.

Houses built on cellar structures where the drainage beneath and around the foundation plate of the cellar is substandard suffer from corresponding problems.

There are also ventilated floors where a carrying layer such as a chipboard panel is disposed on other types of spacers, for example plastic sleeves, plastic screws, joists etc. Such floors are marketed under names such as Nivell System and Giha.

On laying the floor entitled Nivell System, a joist system is assembled above the subfloor with the aid of spacers at the desired height in order to create a ventilation space. The spacers are adjusted until the upper surfaces of the joists coincide in a common planar surface. Above the joist system, flooring panels are then disposed on which the inner flooring is then laid.

On mounting and laying a floor from Giha, a floor panel is laid using sleeve-shaped flooring screws which are threaded in the flooring panel out onto the uneven floor surface. The flooring panel is adjusted to be flush until the upper side is horizontal, by adjusting the flooring screws. Once the first flooring panel has been adjusted at the correct level, the next flooring panel is laid out and adjusted so that the flooring panels together form a planar surface. When all of the flooring panels form a planar surface, it is time to secure the flooring screws in the subjacent uneven surface, in which event a drill fitted with a long bit is employed to drill through a hole in the bottom of the levelling screw and in the subjacent surface. When a sufficient drill depth ahs been reached in the drill hole, the drill bit is removed and the drilling debris or cuttings that have accumulated in the bottom of the flooring screw and the drill hole are removed by means of a vacuum cleaner which has an adapted nozzle in order to access the bottom of the flooring screw. Once the debris or cuttings have been removed, the flooring screws are secured in that a plug is driven into the drill hole whereafter the excess length of the flooring screw which protrudes up above the flooring surface is cut flush with the flooring panel.

On drilling of the hole, no device is employed either for centring the bit in the drill hole or for estimating the drilling depth. This entails that the operator must search for the hole in the bottom of the flooring screw using the drill bit before drilling can commence and then the operator drills as best he can in order to realise the correct drilling depth and a drill hole with a substantially vertical centre axis in relation to the floor surface.

### PROBLEM STRUCTURE

The present invention has for its object to simplify mounting and laying of a ventilated inner floor by reducing the number of working phases, which entails a reduction in work time, by designing the above-intimated apparatus so that it realises control during the drilling operation and achieves the requisite drilling depth, as well as removing the drilling debris or cuttings during the drilling operation.

### SOLUTION

The object forming the basis of the present invention will be attained if the apparatus intimated by way of introduction is characterised in that the drill bit extends axially in the screening device which has a spacer for cooperation with the sleeve, a guide member for substantially tightly surrounding the drill bit, and that the extraction section is disposed between the guide member and the drilling area in the bottom of the sleeve.

### BRIEF DESCRIPTION OF THE ACCOMPANYING DRAWINGS

The present invention will now be described in greater detail hereinbelow, with reference to the accompanying Drawings. In the accompanying Drawings:
- Fig. 1: is a cross sectional view of an apparatus according to the present invention, on drilling;
- Fig. 2: is a cross sectional view of the apparatus of Fig. 1, taken along the line A-A; and
- Fig. 3: is a cross sectional view of the inner flooring in the mounted state.

### DESCRIPTION OF PREFERRED EMBODIMENT

In the description given below, directional and positional indications will be employed. These relate to a situation which is normal for the use of the apparatus according to the present invention, for example on mounting and laying a floor.

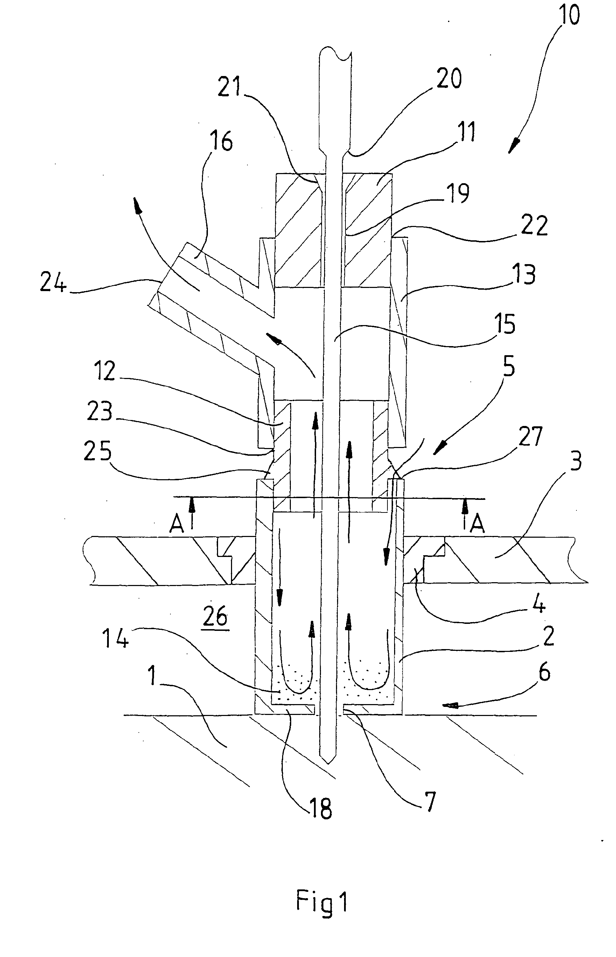

Fig. 1 shows an apparatus for removal of drilling debris, e.g. cuttings, on drilling using a drill, for example a hammer drill or percussion drill, in a subfloor 1, for example of concrete, brick or similar material at the bottom of a flooring or levelling screw designed as a sleeve 2, preferably on mounting a ventilated inner flooring 3, but also in drilling operations carried out on/in walls.

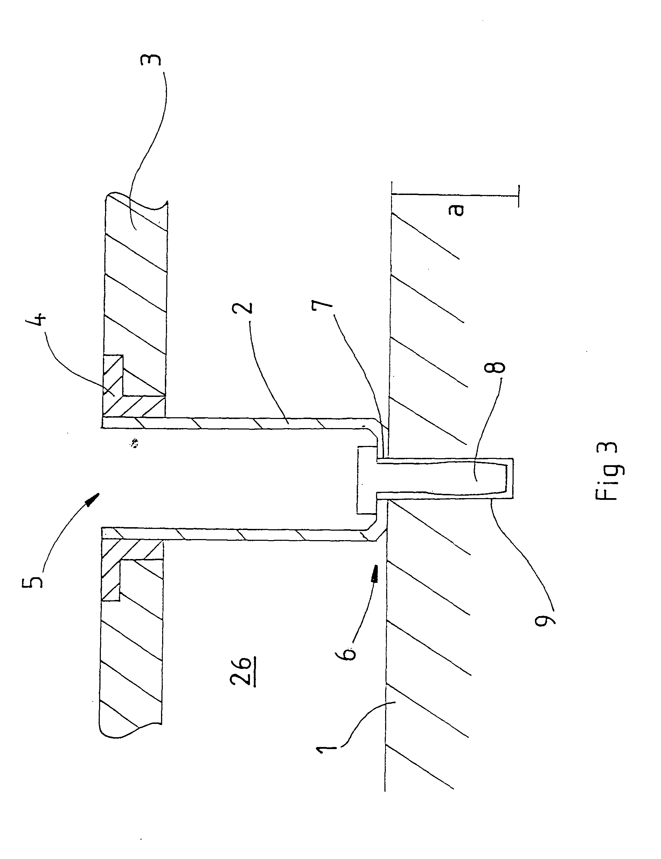

Fig. 3 shows a flooring panel 3, e.g. a chipboard panel, and a sleeve 2 in a mounted position. This Figure shows a subfloor 1 which may be uneven, consisting of concrete, brick or other material. Between the subfloor 1 and the flooring panel 3, an air gap 26 is created in that the sleeve 2 functions as a spacer between the upper flooring 3 and the subfloor 1. The flooring panel 3 has threaded plastic inserts 4 premounted in the panel 3, in which the sleeves 2 are disposed. The sleeve 2 is exteriorly threaded so as to fit in the threaded plastic insert 4 in the flooring panel 3, it being possible to screw the sleeve 2 to the correct level in the flooring panel 3. The sleeve 2 is a sleeve-shaped screw with an open end 5 and a closed end 6 with a centred hole 7 for an expander plug 8. The sleeve 2 is a levelling screw of an inner, non-circular polygonal cross section in order, with the aid of a special tool which is disposed in the open end 5 of the sleeve 2, readily to be able to adjust the sleeve 2 to the correct level. Fig. 3 also shows the drill hole 9 in the subfloor 1 in which the expander plug 8 is disposed in order to retain the sleeve 2 and the flooring panel 3 against the subfloor 1.

The apparatus illustrated in Fig. 1 comprises a screening device 10 which includes a guide member 11 and a spacer 12, an extraction section 13 and a sleeve 2 which retains the drilling debris or cuttings 14 within a limited area interiorly in the sleeve 2 at its bottom.

The guide member 11, the extraction section 13, the spacer 12 and the sleeve 2 are preferably manufactured from plastic or metal.

A drill bit 15 extends axially through the entire screening device 10, the spacer 12 cooperating with the sleeve 2. The sleeve 2 is one of the flooring screws that are to be mounted in place.

The extraction section 13 is in flow communication with the interior of the screening device 10 and is connected to a source of suction via a connection 16 for removing the drilling debris or cuttings 14.

The source of suction may be a vacuum cleaner or other machine for sucking up particles. The source of suction may either be free standing from the apparatus or be synchronised with the drill, in which event the source of suction is automatically started and stopped simultaneously as the drill is started and stopped.

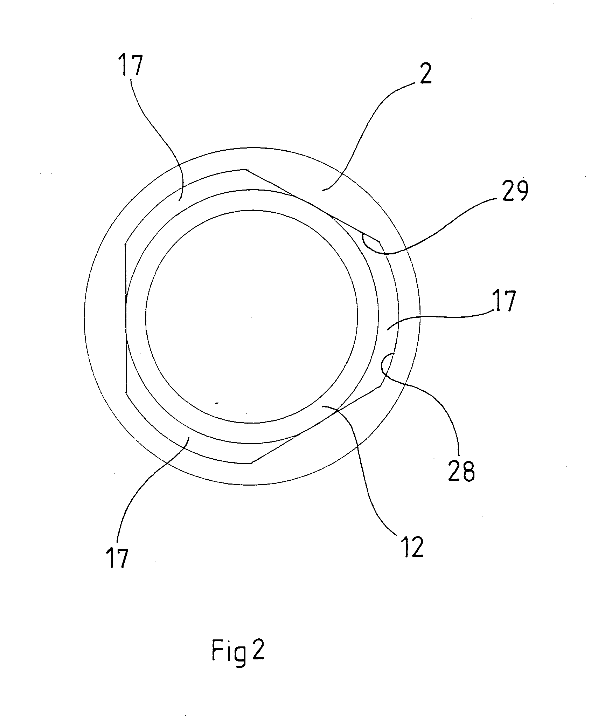

The apparatus has an air inlet 17 which is shown in Fig. 2 and which creates an air current into the screening device 10. The air current displays a flow pattern which is illustrated by flow indicators in the form of arrows in Fig. 1. The air current has its path in through the air inlet 17, between the spacer 12 and the sleeve 2, whereafter it is axially directed along the inner walls of the sleeve 2 down towards the bottom 18 of the sleeve where the drilling debris or cuttings 14 have accumulated during the drilling operation. At the bottom 18 of the sleeve, the air current turns and entrains with it the drilling debris or cuttings 14 and flows up through the spacer 12 towards the extraction section 13 along the drill bit 15 and its longitudinal direction and then out through the connection 16 of the extraction section 13 to the source of suction.

The guide member 11 of the screening device 10 is of sufficient length to centre the drill bit 15 radially in the screening device 10 and the guide member 11 realises a substantially sealing surround of the drill bit 15 in order to retain the drilling debris or cuttings 14 in the screening device 10.

The guide member 11 is a circular cylinder which has an adapted, longitudinal through-going hole 19 for the drill bit 15. The dimensions of the hole 19 should be slightly larger than the dimension of the drill bit 15 but not larger than the locking jaw 20 of the drill bit 15 in order that the drill bit 15 will operate freely during the drilling, but not pass right through the guide member 11. The locking jaw 20 serves as a depth abutment in the practical application. On the upper side of the guide member 11, in association with the hole, there is a countersunk depression 21 which serves as an abutment surface for the jaw 20 of the drill bit 15. The depression 21 is adapted to fit the dimension of the jaw 20 of the drill bit 15.

The guide member 11 is fixedly disposed in the extraction section 13 which is disposed in or on a spacer 12 which in turn is disposed in the sleeve 2. The connections between the guide member 11, the extraction section 13, the spacer 12 and the sleeve 2 are adapted for mounting in one another.

The extraction section 13 is a branch connection in the form of three pipes which converge at their centre point. The branch connection has three different apertures 22, 23 and 24. The three apertures are in communication with each other. Two of the apertures 22, 23 each form a plane which are parallel with one another and opposingly disposed on a common axis, these forming connections for the guide member 11 and the spacer 12. The drill bit 15 runs in the common axis for the two opposing apertures 22 and 23. The third aperture 24 is for the connection 16 to the source of suction and is disposed at an acute angle in relation to the drill bit 15. The third aperture 24 is directed upwards so as to contribute in an even current of air in the screening device 10 and counteract the occurrence of air vortices.

The spacer 12 is designed as a tube with two openings which are in communication with one another. The spacer 12 is adapted to be disposed interiorly in the sleeve 2. The spacer 12 replaceable in accordance with the intended drilling depth a, and the drilling depth may be modified in response to the selected length of the spacer. That part of the spacer 12 which is disposed in the sleeve 2 is of circular cross section. The spacer 12 has at least one abutment 25 formed as a projection or a circumferential ring which is disposed on the outer wall of the spacer 12 for abutment against the upper edge 27 of the sleeve 2. The abutment 25 creates an axial distance between the sleeve 2 and the spacer 12 in order to create the air inlet 17 into the sleeve 2.

The sleeve 2 is designed as an elongate cylinder with an inner configuration which is shown in Fig. 2 corresponding to a combination of three arcs of a circle 28 and three planar surfaces 29, the circle sectors and triangles being alternatingly positioned adjacent one another. The cross section of the spacer 12 in relation to the inner cross section of the sleeve 2 forms ducts for the air inlet 17, the spacer 12 being disposed in the sleeve 2 with an outer diameter which corresponds to the space between the inner straight edges 29 of the sleeve 2.

The guide member 11, the extraction section 13 and the spacer 12 together have a fixed length for a predetermined drilling depth a. During the drilling operation, use is made of a sleeve 2 with all of its original length, in which event the upper edge 27 of the sleeve is employed as an abutment against the spacer 12 in order to realise the predetermined drilling depth a.

The spacer 12 may also be telescopic, in which event the drilling depth may be adjusted without the spacer 12 needing to be replaced by a spacer of a different length.

The spacer 12 may also be compressible in the longitudinal direction and, for example be designed a bellows, in which even the drilling depth is not restricted by or determined by the total length of the screening device. Thus, the drilling depth is determined by the operator of the drill.

## Claims

1. An apparatus for the removal of drilling debris, so-called cuttings, on drilling in concrete, brick or similar materials interiorly at the bottom of a sleeve; and comprising a screening device (10) for retaining the cuttings (14) in a limited area, an extraction section (13) in flow communication with the interior of the screening device (10) and for connection to a source of suction, and also an air inlet (17) for air current into the screening device, **characterised in that** the drill bit (15) extends axially in the screening device (10) which has a spacer (12) for cooperation with the sleeve (2), a guide member (11) for substantially tightly surrounding the drill bit (15), and that the extraction section (13) is disposed between the guide member (11) and the drilling area in the bottom (18) of the sleeve (2).

2. The apparatus for the removal of drilling debris as claimed in Claim 1, **characterised in that** the sleeve (2) is of non-circular, polygonal interior cross section.

3. The apparatus for the removal of drilling debris as claimed in Claim 1 or 2, **characterised in that** the cross section of the spacer (12) in relation to the inner cross section of the sleeve (2) forms ducts for the air inlet (17).

4. The apparatus for the removal of drilling debris as claimed in Claim 3, **characterised in that** the spacer (12) is replaceable in accordance with the intended drilling depth (a).

5. The apparatus for the removal of drilling debris as claimed in Claim 1, **characterised in that** the guide member (11) is fixedly secured in the extraction section (13).

6. The apparatus for the removal of drilling debris as claimed in Claim 5, **characterised in that** the guide member (11) centres the drill bit (15) radially in the screening device (10).
